Europäisches Patentamt

European Patent Office

Office européen des brevets

(11) Publication number: **0 074 769**
**B1**

(12) **EUROPEAN PATENT SPECIFICATION**

(45) Date of publication of patent specification: **17.09.86**

(21) Application number: **82304648.7**

(22) Date of filing: **03.09.82**

(51) Int. Cl.⁴: **G 10 L 5/00**

(54) **Recognition of speech or speech-like sounds using associative memory.**

(30) Priority: **04.09.81 JP 140525/81**

(43) Date of publication of application:
**23.03.83 Bulletin 83/12**

(45) Publication of the grant of the patent:
**17.09.86 Bulletin 86/38**

(84) Designated Contracting States:
**DE FR GB IT**

(56) References cited:
**DE-A-2 552 437**

**1978 IEEE INTERNATIONAL CONFERENCE ON ACOUSTICS, SPEECH & SIGNAL PROCESSING, TULSA, 10th-12th April 1978, pages 735-738, IEEE, New York (USA);K.KIDO et al.**

(73) Proprietor: **COMPUTER BASIC TECHNOLOGY RESEARCH ASSOCIATION**
**4-28 Mita 1-chome Minato-ku**
**Tokyo (JP)**

(72) Inventor: **Togawa, Fumio**
**2271 Narasaka-cho**
**Nara-shi Nara-ken (JP)**
Inventor: **Tanaka, Atsuo**
**313 Higashi Midorigaoka Kuramoto-machi**
**Nabari-shi Mie-ken (JP)**

(74) Representative: **Wright, Peter David John et al**
**R.G.C. Jenkins & Co. 12-15, Fetter Lane**
**London EC4A 1PL (GB)**

# Description

This invention relates to an improvement in a method of speech recognition and more particularly it relates to a method for recognizing input speech or speech-like sounds, including words or the like.

A conventional way to recognize sound inputs such as words is to carry out an acoustic process on sound information, for example, input words or the like are subjected to a process for acquiring feature vector input patterns for each of their mono-syllables, and to check if matching is present between those input patterns and reference patterns such as for mono-syllables. The input sound information is then treated as a train of monosyllables and compared with a dictionary for speech recognition.

This method however has a certain degree of ambiguity in comparing the input mono-syllable patterns with the mono-syllable reference patterns. For instance, the input "SATUKIBARE" (its English meaning is a fine weather in May or rainy seasons) may often be recognized as the train of mono-syllables "/SA/TU/KI/PA/RE/" (first candidate) with a resultant decline in the accuracy of word recognition. In the event that several candidates are made available from the comparison between the input mono-syllable patterns and the mono-syllable reference patterns, and "PA", "TA", "A", "BA" and the like are available as candidates for the fourth mono-syllable, verification of the trains of those mono-syllables with a dictionary enhances accuracy of recognition of words or the like to some extent but the time taken by the verification is long and may cause errors in such verification.

The present invention seeks to improve on this prior art by using an associative memory device, such as a so-called "Associatron".

The use of an associative system for improving degraded information is disclosed in DE—A— 2 552 437. However, the use of an associative system as part of a recognition means having other recognition or comparison stages is not disclosed.

According to a first aspect of the present invention there is provided a method of speech recognition in which an input speech signal is compared with a plurality of stored signals to provide a provisional identification of the input speech signal in terms of a train of said stored signals, and in which a provisional identification of the input speech signal is verified by reference to a dictionary whereby if the provisional identification being verified matches an item in the said dictionary the input speech signal is identified as corresponding to the said matched dictionary item,

characterised in that the said provisional identification provided by the said comparison is a first provisional identification and the said train of stored signals is a first recognition train, and in that the said provisional identification which is verified is a second provisional identification and is provided in terms of a second recognition train which is derived from the first, the said derivation comprising performing on the first recognition train an associative process using a model of an associative memory which has been constructed in accordance with the contents of the dictionary.

According to a second aspect of the present invention there is provided speech recognition apparatus having comparison means to compare an input speech signal with each of a plurality of stored signals so as to generate a provisional identification of the input speech signal in terms of a train of the said stored signals, a dictionary containing a plurality of dictionary items which the input speech signal may be identified as, and verification means to verify a provisional identification by reference to the dictionary and, if the said provisional identification being verified matches a said dictionary item, generate on output identifying the said input speech signal as corresponding to the matched dictionary item,

characterised in that the said provisional identification generated by the said comparison means is a first provisional identification and the said train of stored signals is a first recognition train, and in that the said apparatus further had a model of an associative memory formed in accordance with the said dictionary items and means to perform an associative process on the said first recognition train using the said model of an associative memory to generate a second recognition train, ·the said provisional identification verified by the verification means being a second provisional identification and being in terms of the said second recognition train.

Preferably the said model of an associative memory comprises a matrix of digital values formed by combining respective self-correlation matrices of digital values for the respective items in the dictionary. Advantageously each said dictionary item corresponds to a string of said stored signals, and each said stored signal corresponds to a signal string of digital values, whereby each respective said dictionary item corresponds to a item string of digital values derived from the said signal strings of the stored signals in the respective string of stored signals, and the respective said self-correlation matrices represent the self-correlation of the respective said item strings of digital values.

Typically, the dictionary items will be words.

An embodiment of the present invention, given by way of example, will now be described with reference to the accompanying drawings, in which:—

Figs. 1 to 3 are illustrations for diagrammatically explaining steps of an associative process using a model of an associative memory device; and

Fig. 4 is a schematic block diagram of a speech recognition system embodying the present invention.

before an embodiment of the present invention will be fully discussed in the following description, a model of an associative memory deice for use with a speech recognition system and its operating principle will be explained first.

The model of an associative memory device is a distributed multi-associative memory of the self recalling type and assumes the basic performance that it outputs the memory pattern having the closest correlation to an input pattern which is incomplete or distorted.

The principle of memorizing and recalling in the model of the associative memory device can be represented by five formulas as follows: Note that bold-faced characters denote vectors.
Pattern:

$$X_K=(X_{K1}, X_{K2}, \ldots X_{Kl}, \ldots X_{KL})^T \qquad (1)$$

T: transposition
component $X_{Kl}$ can assume three values, 1, 0 and −1 memory (K);

$$M=\{m_{ij}\}=\sum_{K=1}^{K} M_K \qquad (2)$$

$$M_K=X_K \cdot X_K^T \qquad (3)$$

recall;

$$Z=\emptyset[M \cdot Y] \qquad (4)$$

$$\emptyset[a]=\begin{cases} 1 \text{ if } a>0 \\ 0 \text{ if } a=0 \\ -1 \text{ if } a<0 \end{cases} \qquad (5)$$

where **Y** is the input and **Z** is the recalled pattern. The pattern $X_K$ as defined in formula (1) is a column vector of a word length L whose components assume three values, 1, 0 and −1. Memorizing is effected in the form of a multi matrix **M** formed by adding the correlation matrix $M_K$ of each pattern $X_K$ pursuant to formulas (2) and (3). In conjunction with the input pattern **Y**, a recalled pattern is recalled through matrix calculation of the input pattern **Y** and the memory matrix **M** as defined by formulas (4) and (5). It should be noted that each of components in the recalled pattern **Z** can assume only the values 1, 0 and −1, which are assigned pursuant to formula (5).

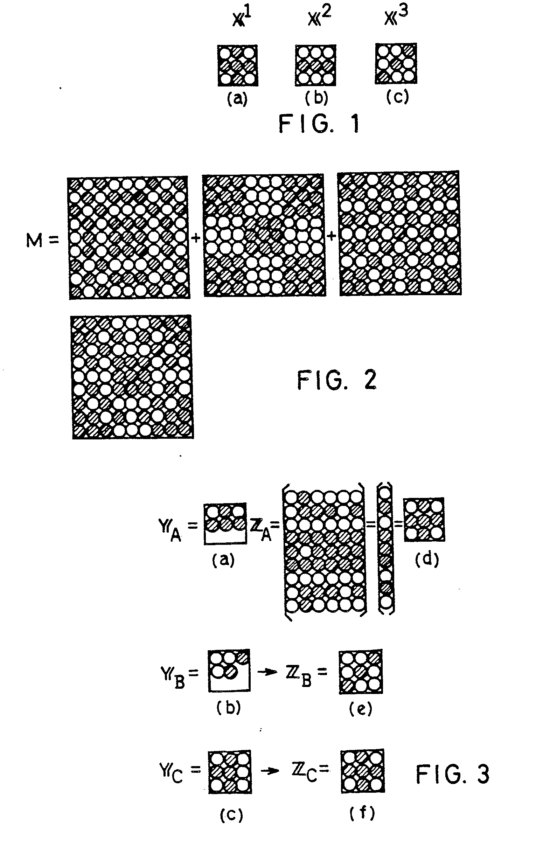

A simple example of memorizing and recalling by the model of associative memory device is given in Figs. 1 to 3 in which each of components $m_{ij}$ in the memory matrix **M** is quantized pursuant to formula (5).

Fig. 1 schematically illustrates three patterns (therefore K=3) $X^1$, $X^2$ and $X^3$ in which L=9. In the reference patterns the mark ▨ denotes "1" the Mark ▧ denotes "−1" and the mark ☐ denotes "0".

The three patterns $X^1$, $X^2$ and $X^3$ shown in Fig. 1 are processed in accordance with formulas (2) and (3) to produce respective correlation matrices, which are added to form the memory matrix **M** as shown in Fig. 2. Calculation is executed on input patterns **Y** ($Y_A$, $Y_B$ and $Y_C$ as depicted in Figs. 3(a) to 3(c) as respective patterns **Y**) and the memory matrix **M** with the result that the patterns $Z_A$, $Z_B$ and $Z_C$ for **Z** are respectively recalled as depicted in Figs. 3(d) to 3(f).

That is, $Z'=M \cdot Y$ by matrix multiplication, and

$$Z=\emptyset[Z'] \text{ where } \emptyset[a]=\begin{cases} 1 \text{ if } a>0 \\ 0 \text{ if } a=0 \\ -1 \text{ if } a<0 \end{cases}$$

The above process is carried out so as to recall the pattern **Z** from the input pattern **Y**.

Thus for an input pattern **Y** having ambiguity ($Y_A$ and $Y_B$ examples of incomplete patterns and $Y_C$ is a deformed pattern), there is developed the memory pattern **X** with the closest correlation to the input pattern.

According to the present invention, the principle of pattern correction by use of the model of the associative memory device and more particularly correction of deformed patterns is applied to speech recognition with verification by use of a dictionary.

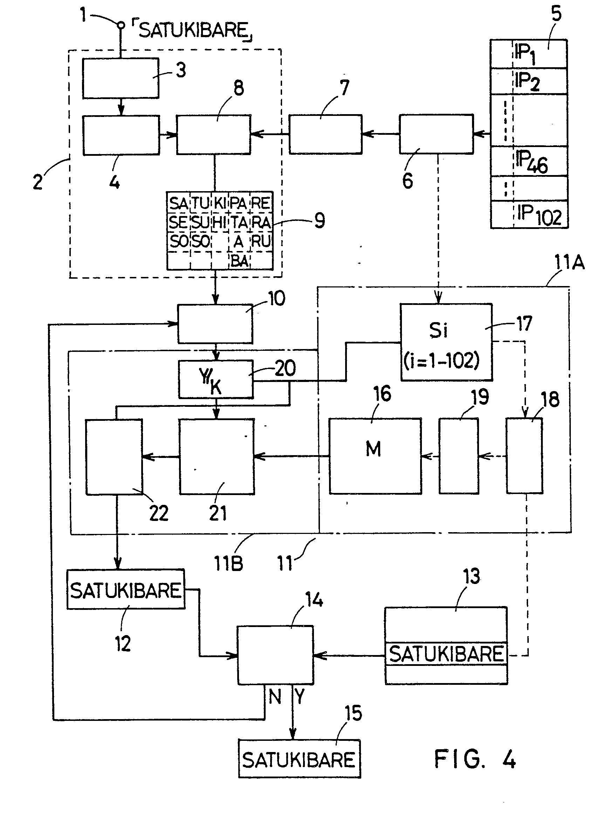

An embodiment of the present invention will now be described. Fig. 4 shows a schematic block diagram in which the associative process relying upon the model of the associative memory device is applied to a dictionary verification system containing mono-syllable sound reference patterns for the purpose of speech recognition. In Fig. 4, a sound signal in units of a word applied to an input terminal 1 is fed to a mono-syllable recognition section 2 of a well-known structure. For example, the sound signal applied to the input terminal 1 is treated by an acoustic processor 3 which effects feature extraction for each of the mono-syllables in the sound signal in turn and loads temporarily a feature pattern for each of the mono-syllables into a buffer memory 4. A main memory 5, on the other hand, contains a large number of reference patterns

$$P_i(i=1-102),$$

one for each reference mono-syllable. These reference patterns are fetched sequentially from a memory control 6 and stored temporarily in a second buffer memory 7. It is desired whether there is matching between the mono-syllable input feature patterns of the input sound signal as stored in the buffer memory 4 and the mono-syllable reference feature patterns in the buffer memory 7. Similarity calculator 8 executes the similarity calculation repeatedly so as to seek the highest degree of resemblance between the two patterns. The first or most closely resembling candidate is selected and followed by the second and succeeding candidates which have lower degrees of resemblance, thereby forming first trains of mono-syllable recognition signals to be loaded into a memory 9.

The contents of the memory 9, that is, the first train of mono-syllable recognition signals from the mono-syllable recognition section 2, are transferred via a candidate selector 10 to an associative process section 11 composed of an associative memory portion 11A and a recall processor 11B. The associative process section 11 corrects the first train of mono-syllable recognition signals and the results of such correction are stored temporarily in a memory 12 as a second train of mono-syllable recognition signals. The second train of the mono-syllable recognition signals is compared with the contents of a word dictionary 13 by means of a comparator 14. If both agree, then the results are output via an output device 15. If they disagree, the candidate selector 10 is rendered operable to enable the first train of the mono-syllable recognition signals bearing the second highest resemblance to be transferred from the memory 9 to the associative process section 11.

The associative process section 11 has a memory 16 which contains memory matrix $\mathbf{M}$ created in the following manner, based upon the model of the associative memory device, in correspondence with the word dictionary 13. It is already noted that the second train of the mono-syllable recognition signals is recalled from the first with the aid of the memory matrix $\mathbf{M}$.

The following will set forth a way to create the memory matrix $\mathbf{M}$. The mono-syllable reference patterns $\mathbf{P}_i$ which have been stored in the main memory 5 and fetched via the memory control 6 are converted into symbols

$$S_i (i=1-102)$$

of a symbol length LS=32 binary components "1" and "−1" according to the distribution of relative distances of the mono-syllable reference patterns $\mathbf{P}_i$. The symbols $S_i$ are thereafter loaded into a memory 17.

Based upon relative distance matrices D $(d_{ij})$ ($d_{ij}$ is the distance between (i)th mono-syllable and (j)th mono-syllable) of the mono-syllable reference patterns $\mathbf{P}_i$, the mono-syllable symbols $S_i$ are encoded as follows into symbols whose length LS=32 for each mono-syllable. In other words, using the farthest neighbour method the 102 mono-syllables (/A/ to /N/ and /GA/ to /PYO/) are · grouped into 31 clusters by hierarchic clustering and orthogonal symbols of 32 binary components "1" and "−1" are assigned to each of these clusters. Furthermore, symbols are assigned to each of the mono-syllables in the same cluster, the symbols being on a circumference extending a hamming distance diameter of 2 from each of the orthogonal symbols and having a correlative hamming distance of 4, thereby to provide the symbol for the (i)th mono-syllable. By creating the symbols $S_i$ for the mono-syllables in this manner the correlative distance or the hamming distance among the symbols falling in the same cluster is 4, whereas the hamming distance among the symbols in the different clusters is at least 12.

The hierarchic clustering is a way to define the distance d ([X, Y], Z) between a category X, Y having the minimum distance in (j)th class and another category Z when incorporating it into the same cluster, according to the following formula:

$$d([X, Y], Z)=\max(\ d(X, Z),\ d(Y, Z))\qquad(7)$$

In addition, the hamming distance is the distance $d_H$ between two symbols

$$a:(a_1,\ a_2,\ \ldots\ a_n),$$

$$b:(b_1,\ b_2,\ \ldots\ b_n)$$

specified below:

$$dH=\sum_{i=1}^{n} C_i,$$

$$C_i=\begin{cases} 0 \text{ if } a_i=b_i \\ 1 \text{ if } a_i \neq b_i \end{cases}\qquad(8)$$

An encoder 18 in the associative memory 11A converts the contents of the word dictionary 13 into word patterns correlated with the symbols $S_i$, thus creating the words patterns $X_K$ correlated with the symbols $S_i$. Assuming now that the maximum number N of mono-syllables in the words stored in the word dictionary 13 is 5, the word pattern $X_K$ can be defined as follows:

$$X_K=\{A_1, A_2, \ldots A_n, \ldots A_N, \overline{A_1}, \overline{A_2}, \ldots \overline{A_n}, \ldots \overline{A_N}\}^T$$
$$(6)$$

where $A_n$ denotes the mono-syllable symbol for (n)th syllable and $\overline{A_n}$ denotes the inversion of $A_n$. It is however to be noted that blank syllables consist of components "0". The word pattern $X_K$ is represented in terms of column vectors of a word length

$$L=LS . N . 2=320$$

having the same frequency of components "1" and "−1".

Having been converted into the word pattern $X_X$ in the foregoing manner through the encoder 18, the words in the dictionary are fed to a correlation calculator/matrix multiplexer 19 which in turn executes the auto-correlation calculation as defined by formula (3) and multiplexes the correlation matrices corresponding to each of the words pursuant to formula (2) to thereby create the memory matrix $\mathbf{M}$. The resulting memory matrix M is stored as word information in the memory 16.

An encoder 20 in the recall processor 11B within the associative process section 11 converts the train of the mono-syllable recognition signals from the mono-syllable recognition section 2 including the acoustic processor 3 into the input word pattern **Y** correlated with the symbols **S$_i$**. A matrix calculator 21 performs the matrix calculation on the input word pattern **Y** and the memory matrix **M** in the memory 16 pursuant to formulas (4) and (5) and recalls the corrected word pattern **Z**. A decoder 22 converts the recalled word pattern into a train of mono-syllable signals having the same code system as that of the information stored in the word dictionary 13 and the train of recalled mono-syllables (the second train of mono-syllables) is thereafter retained temporarily in the memory 12. Dictionary reference is conducted between the train of the recalled mono-syllables stored in the memory 12 and the contents of the word dictionary 13 through the comparator 14 and, if there is agreement, the results thereof are output through the output device 15.

Speech recognition tests with the above described system show that the associative process step improves the ratio of rejection. More particularly, the tests were conducted on three male speakers who each pronounced 50 hardly readable Kanji (Chinese characters) words (the maximum number of mono-syllables was 5 and the average thereof was 3.2), in the form of isolated mono-syllables ten times each within 2 sec, and thus a total of 1500 word samples were produced. The results of these speech recognition tests are indicated in Table 2 where one of the following steps was taken in conjunction with mono-syllable candidates derived from a mono-syllable recognition method as defined in table 1:

(1) Dictionary reference or verification is carried out on only the first candidate of each of mono-syllables;

(II) Dictionary verification is carried out on trains of mono-syllables sequentially in the ranking of candidates; and

(III) Dictionary verification, combined with an associative process according to the present invention, is carried out.

TABLE 1
Mono-syllable recognition method

| | |
|---|---|
| Quantization: | 16KHz sampling<br>12 bits |
| Feature: | up to 24th Cepstrum coefficients<br>16 frames |
| Matching: | using a Kalman filter |
| Registration: | 102 mono-syllables X 2 times |

TABLE 2
Results of speech-like word recognition tests

accuracy
(%)
(error %)

| Speaker \ Method | I | II | III |
|---|---|---|---|
| A | 32.0 | 67.6 | 92.6 (4.2) |
| B | 51.4 | 92.0 | 98.2 (0.4) |
| C | 52.6 | 87.0 | 96.4 (1.4) |
| Average | 45.3 | 82.2 | 95.7 (2.0) |

Note that the remaining percent for each figure indicates rate of rejection (that is, rejection of inputs as un-readable).

The results shown in Table 2 reveal that the method (II) gained a 36.9% improvement of rejection ratio on the average as compared with the method (I), and that the method (III) gained 13.5% improvement as compared with the method (II). The method embodying the present invention (the method III) achieved a considerable improvement in rejection ratio and recognition speed over the conventional methods because for instance, in the event that the first candidate developed as a result of mono-syllable recognition applied to the sound input "satukibare" is the mono-syllables "SA" "TU" "KI" "PA" "RE", the associative process of the present invention makes it possible to recall "SATUKIBARE" as stored in the word dictionary 13.

It should be noted that the trains of mono-syllable candidates in the methods (II) and (III) were selected in the increasing order of the sum of the matching distances $q_{mn}$ (matching distance of (m)th candidate for (n)th mono-syllable) for recognition of mono-syllables:

$$\min \left\{ \sum_{n=1}^{No} q_{mn}, \ N_0 : \text{number of syllables} \right\} \quad (9)$$

The model of the associative memory device described above is of a multiplex memory type which is liable to blur its contents with an increase in vocabulary and has a limited capacity. The features of the associative memory are that it can perform memory and associative processes from one subject to another as long as a small number of sound reference patterns are registered in the system and, it can improve its correction performance thanks to optimum encoding based upon the distribution of distances of mono-syllables and demonstrate its usefulness for recognition of speech from a larger vocabulary.

Whereas the associative process is applied to the dictionary verification section in recognizing the words in the light of the mono-syllable reference patterns in the above illustrated embodiment of the present invention, it is obvious to those skilled in the art that the associative process is equally applicable to dictionary verification for recognition of words using phonetic reference patterns. The memory matrices **M** may be structured in a hierarchic system. It is further possible that the associative process may be effected on a sentence-by-sentence basis or subject-by-subject basis.

**Claims**

1. A method of speech recognition in which an input speech signal is compared with a plurality of stored signals to provide a provisional identification of the input speech signal in terms of a train of said stored signals, and in which a provisional identification of the input speech signal is verified by reference to a dictionary (13) whereby if the provisional identification being verified matches an item in the said dictionary (13) the input speech signal is identified as corresponding to the said matched dictionary item,
characterised in that the said provisional identification provided by the said comparison is a first provisional identification and the said train of stored signals is a first recognition train, and in that the said provisional identification which is verified is a second provisional identification and is provided in terms of a second recognition train which is derived from the first, the said derivation comprising performing on the first recognition train an associative process using a model of an associative memory (16) which has been constructed in accordance with the contents of the dictionary (13).

2. A method according to claim 1 in which the said model of an associative memory comprises a matrix (**M**) of digital values formed by combining respective self-correlation matrices of digital values for the respective items in the dictionary.

3. A method according to claim 2 in which said each said dictionary item corresponds to a string of said stored signals, and each said stored signal corresponds to a signal string of digital values, whereby each respective said dictionary item corresponds to a item string (**X**) of digital values derived from the said signal strings of the stored signals in the respective string of stored signals,
and the respective said self-correlation matrices represent the self-correlation of the respective said item strings (**X**) of digital values.

4. A method according to any one of claims 1 to 3 in which the said dictionary items are words.

5. A method according to any one of the preceding claims in which the said stored signals are syllables.

6. A method according to any one of claims 1 to 4 in which the said stored signals are phonemes.

7. Speech recognition apparatus having comparison means (2) to compare an input speech signal with each of a plurality of stored signals so as to generate a provisional identification of the input speech signal in terms of a train of the said stored signals, a dictionary (13) containing a plurality of dictionary items which the input speech signal may be identified as, and verification means (14) to verify a provisional identification by reference to the dictionary (13) and, if the said provisional identification being verified matches a said dictionary item, generate on output identifying the said input speech signal as corresponding to the matched dictionary item,
characterised in that the said provisional identification generated by the said comparison means is a first provisional identification and the said train of stored signals is a first recognition train, and in that the said apparatus further had a model of an associative memory (16) formed in accordance with the said dictionary items and means (11B) to perform an associative process on the said first recognition train using the said model of an associative memory (16) to generate a second recognition train, the said provisional identification verified by the verification means (14) being a second provisional identification and being in terms of the said second recognition train.

8. Apparatus according to claim 7 in which the said model of an associative memory comprises a matrix (**M**) of digital values formed by combining respective self-correlation matrices of digital values for the respective items in the dictionary.

9. Apparatus according to claim 8 in which each said dictionary item corresponds to a string of said stored signals, and each said stored signal corresponds to a signal string of digital values, whereby each respective said dictionary item corresponds to a item string (**X**) of digital values derived from the said signal strings of the stored signals in the respective string of stored signals, and the respective said self-correlation matrices represent the self-correlation of the respective said item strings (**X**) of digital values.

10. Apparatus according to any one of claims 7 to 9 in which the said dictionary items are words.

11. Apparatus according to any one of claims 7 to 10 in which the said stored signals are syllables.

12. Apparatus according to any one of claims 7 to 11 in which the said stored signals are phonemes.

**Patentansprüche**

1. Spracherkennungsverfahren, bei dem ein Eingangssprachsignal mit einer Merhzahl gespeicherter Signale verglichen wird, um eine vorläufige Identifikation des Eingangssprachsignals in Form einer Folge der gespeicherten Signale zu erhalten, und bei dem eine vorläufige Identifikation des Eingangssprachsignals unter Heranziehung eines Wörterbuches (13) auf seine Richtigkeit hin überprüft wird, wodurch bei Übereinstimmung der auf ihre Richtigkeit hin überprüften vorläufigen Identifikation mit einem Ausdruck im Wörterbuch (13) das Eingangssprachsignal als der entsprechende übereinstimmende Wörterbuchausdruck identifiziert wird, dadurch gekennzeichnet, daß die vorläufige und durch den Vergleich erhaltene Identifikation eine erste vorläufige Identifikation und die Folge der gespeicherten Signale eine erste Erkennungsfolge sind, und daß die vorläufige Identifikation, die auf ihre Richtigkeit hin überprüft wird, eine zweite vorläufige Identifikation ist und in Form einer zweiten Erkennungsfolge geliefert wird, die aus der ersten hergeleitet wird, wobei die Herleitung die Durchführung eines Assoziativprozesses an der ersten Erkennungsfolge unter Verwendung eines Musters eines Assoziativspeichers (16) umfaßt, das in Übereinstimmung mit dem Inhalt des Wörterbuchs (13) konstruiert worden ist.

2. Spracherkennungsverfahren nach Anspruch 1, dadurch gekennzeichnet, daß das Muster einers Assoziativspeichers eine Matrix (M) digitaler Werte enthält, die durch Kombination von jeweiligen selbstkorrelierenden Matrizen digitaler Werte für die jeweiligen Ausdrücke im Wörterbuch gebildet ist.

3. Spracherkennungsverfahren nach Anspruch 2, dadurch gekennzeichnet, daß jeder Wörterbuchausdruck einer Folge der gespeicherten Signale und jedes gespeicherte Signal einer Signalfolge digitaler Werte entspricht, so daß ein jeweiliger Wörterbuchausdruck einer Elementfolge (X) digitaler Werte entspricht, die aus den Signalfolgen der gespeicherten Signale in der jeweiligen Folge der gespeicherten Signale hergeleitet ist, und daß die jeweiligen selbstkorrelierenden Matrizen die Selbstkorrelation der jeweiligen Elementfolgen (X) digitaler Werte darstellen.

4. Spracherkennungsverfahren nach einem der Ansprüche 1 bis 3, dadurch gekennzeichnet, daß die Wörterbuchausdrücke Wörter sind.

5. Spracherkennungsverfahren nach einem der Ansprüche 1 bis 4, dadurch gekennzeichnet, daß die gespeicherten Signale Silben sind.

6. Spracherkennungsverfahren nach einem der Ansprüche 1 bis 4, dadurch gekennzeichnet, daß die gespeicherten Signale Phoneme sind.

7. Vorrichtung zur Spracherkennung, mit einer Vergleichseinrichtung (2) zum Vergleich eines Eingangssprachsignals mit jedem Signal einer Mehrzahl gespeicherter Signale, um eine vorläufige Identifikation des Eingangssprachsignals in Form einer Folge der gespeicherten Signale zu erzeugen, einem Wörterbuch (13), das eine Vielzahl von Wörterbuchausdrücken enthält, durch die das Eingangssprachsignal identifizierbar ist, und mit einer Nachprüfeinrichtung (14) zur Überprüfing einer vorläufigen Identifikation auf ihre Richtigkeit hin unter Zuhilfenahme des Wörterbuchs (13), durch die bei Übereinstimmung der auf ihre Richtigkeit hin überprüften vorläufigen Identifikation mit einem Wörterbuchausdruck das Eingangssprachsignal als der entsprechende übereinstimmende Wörterbuchausdruck identifiziert und am Ausgang ein entsprechendes Signal erzeugt wird, dadurch gekennzeichnet, daß die durch die Vergleichseinrichtung erzeugte vorläufige Identifikation eine erste vorläufige Identifikation und die Folge der gespeicherten Signale eine erste Erkennungsfolge sind, und daß die Vorrichtung weiterhin ein Muster eines Assoziativspeichers (16) enthält, das in Übereinstimmung mit den Wörterbuchausdrücken gebildet ist, sowie eine Einrichtung (11B) zur Durchführung eines Assoziativprozesses an der ersten Erkennungsfolge unter Verwendung des Musters des Assoziativspeichers (16), um eine zweite Erkennungsfolge zu erzeugen, wobei die vorläufige und durch die Nachprüfeinrichtung (14) überprüfte Identifikation eine zweite vorläufige Identifikation ist, die in Form der zweiten Erkennungsfolge vorliegt.

8. Vorrichtung nach Anspruch 7, dadurch gekennzeichnet, daß das Muster eines Assoziativspeichers eine Matrix (M) digitaler Werte enthält, die durch Kombination von jeweiligen seblstkorrelierenden Matrizen digital Werte für die jeweiligen Ausdrücke im Wörterbuch gebildet ist.

9. Vorrichtung nach Anspruch 8, dadurch gekennzeichnet, daß jeder Wörterbuchausdruck einer Folge der gespeicherten Signale und jedes gespeicherte Signal einer Signalfolge digitaler Werte entspricht, so daß ein jeweiliger Wörterbuchausdruck einer Elementfolge (X) digitaler Werte entspricht, die aus den Signalfolgen der gespeicherten Signale in der jeweiligen Folge der gespeicherten Signale hergeleitet ist, und daß die jeweiligen selbstkorrelierenden Matrizen die Selbstkorrelation der jeweiligen Elementfolgen (X) digitaler Werte darstellen.

10. Vorrichtung nach einem der Ansprüche 7 bis 9, dadurch gekennzeichnet, daß die Wörterbuchausdrücke Wörter sind.

11. Vorrichtung nach einem der Ansprüche 7 bis 10, dadurch gekennzeichnet, daß die gespeicherten Signale Silben sind.

12. Vorrichtung nach einem der Ansprüche 7 bis 10, dadurch gekennzeichnet, daß die gespeicherten Signale Phoneme sind.

**Revendications**

1. Procédé de reconnaissance de la parole, selon lequel un signal vocal d'entrée est comparé à une série de signaux mémorisés de manière à établir une identification provisoire du signal vocal d'entrée sous la forme d'un train desdits signaux mémorisés, et selon lequel une identification provisoire du signal vocal d'entrée est vérifiée par comparaison à un dictionnaire (13), ce que a pour effet que si l'identification provisoire en cours de vérification coïncide avec un élément situé dans ledit dictionnaire (13), le signal vocal d'entrée est identifié comme correspondant audit élément coïncidant du dictionnaire, caractérisé en ce que ladite identification provisoire établie par ladite comparaison est une première identification provisoire et ledit train de signaux mémorisés est un premier train de reconnaissance, et en ce que ladite identification provisoire, qui est vérifiée, est une second identification provisoire et est traduite sous la forme d'un second train de reconnaissance, qui est déduit du premier, cette déduction consistant à soumettre le premier train de reconnaissance à un traitement associatif utilisant un modèle d'une mémoire associative (16), qui a été réalisé conformément au contenu du dictionnaire (13).

2. Procédé selon la revendication 1, selon lequel ledit modèle de mémoire associative comporte une matrice (**M**) de valeurs numériques, formée par combinaison de matrices respectives d'autocorrélation de valeurs numériques pour les éléments respectifs contenus dans le dictionnaire.

3. Procédé selon la revendication 2, selon lequel chacun desdits éléments du dictionnaire correspond à une suite desdits signaux mémorisés, et chacun desdits signaux mémorisés correspond à une suite de signaux formés de valeurs numériques, ce que a pour effet que chacun desdits éléments respectifs du dictionnaire correspond à une suite d'éléments (**X**) de valeurs numériques déduite desdites suites de signaux mémorisés, dans la suite respective de signaux mémorisés, et lesdites matrices respectives d'auto-corrélation représentent l'auto-corrélation desdites suites respectives d'éléments (**X**) de valeurs numériques.

4. Procédé selon l'une quelconque des revendications 1 à 3, selon lequel lesdits éléments du dictionnaire sont des mots.

5. Procédé selon l'une quelconque des revendications précédentes, selon lequel lesdits signaux mémorisés sont des syllabes.

6. Procédé selon l'une quelconque des revendications 1 à 4, selon lequel lesdits signaux mémorisés sont des phonèmes.

7. Appareil de reconnaissance de la parole, comportant des moyens de comparaison (2) servant à comparer un signal vocal d'entrée à chaque signal d'une série de signaux mémorisés, de manière à établir une identification provisoire du signal vocal d'entrée sous la forme d'un train desdits signaux mémorisés, un dictionnaire (13) contenant une série d'éléments auxquels le signal d'entrée peut être identifié, et des moyens de vérification (14) qui servent à vérifier une identification provisoire en référence au dictionnaire (13) et qui, si ladite identification provisoire en cours de vérification coïncide avec l'un desdits éléments du dictionnaire, produit un signal de sortie identifiant ledit signal vocal d'entrée comme correspondant audit élément coïncidant du dictionnaire, caractérisé en ce que ladite identification provisoire établie par lesdits moyens de comparaison est une première identification provisoire et ledit train de signaux mémorisés est un premier train de reconnaissance, et en ce que ledit appareil comporte en outer un modèle d'une mémoire associative (16), formé conformément auxdits éléments du dictionnaire et des moyens (11B) pour exécuter un traitement associatif sur ledit premier train de reconnaissance par l'utilisation dudit modèle de mémoire associative (7), afin de produire un second train de reconnaissance, ladite identification provisoire vérifiée à l'aide des moyens de vérification (14) étant une seconde identification provisoire et se présentant souu la forme dudit second train de reconnaissance.

8. Appareil selon la revendication 7, dans lequel ledit modèle de mémoire associative comporte une matrice (**M**) de valeurs numériques, formée par combinaison de matrices respectives d'autocorrélation de valeurs numériques pour les éléments respectifs contenus dans le dictionnaire.

9. Appareil selon la revendication 8, dans lequel chacun desdits éléments du dictionnaire correspond à une suite desdits signaux mémorisés, et chacun desdits signaux mémorisés correspond à une suite de signaux formés de valeurs numériques, ce que a pour effet qua chacun desdits éléments respectifs du dictionnaire correspond à une suite d'éléments (**X**) de valeurs numériques déduites desdites suites de signaux mémorisés, dans la suite respective de signaux mémorisés, et lesdites matrices respectives d'auto-corrélation représentent l'auto-corrélation desdites suites respectives d'éléments (**X**) de valeurs numériques.

10. Appareil selon l'une quelconque des revendications 7 à 9, dans lequel lesdits éléments du dictionnaire sont des mots.

11. Appareil selon l'une quelconque des revendications 7 à 10, dans lequel lesdits signaux mémorisés sont des syllables.

12. Appareil selon l'une quelconque des revendications 7 à 11, dans lequel lesdits signaux mémorisés sont des phonèmes.

FIG. 1

FIG. 2

FIG. 3

「SATUKIBARE」

5

IP₁
IP₂
⋮
IP₄₆
⋮
IP₁₀₂

1

3

8

7

6

2

4

| SA | TU | KI | PA | RE |
| SE | SU | HI | TA | RA |
| SO | SO |    | A  | RU |
|    |    |    | BA |    |

9

10

11A

Si
(i=1–102)

17

Y/K

20

16

19

18

M

22

21

11B    11

SATUKIBARE

12

14

13

SATUKIBARE

N  Y

SATUKIBARE

15

FIG. 4